(19) Europäisches Patentamt
European Patent Office
Office européen des brevets

(11) Publication number: 0 070 029 B1

(12) **EUROPEAN PATENT SPECIFICATION**

(45) Date of publication of patent specification: 27.06.90

(51) Int. Cl.$^5$: G 05 B 19/04

(21) Application number: 82106243.7

(22) Date of filing: 13.07.82

(54) **Cycle timer.**

(30) Priority: 14.07.81 JP 110297/81

(43) Date of publication of application: 19.01.83 Bulletin 83/03

(45) Publication of the grant of the patent: 27.06.90 Bulletin 90/26

(84) Designated Contracting States: DE GB

(56) References cited:
US-A-3 905 793
US-A-4 180 862
US-A-4 206 507
US-A-4 249 248

(73) Proprietor: Matsushita Electric Industrial Co., Ltd.
1006, Oaza Kadoma
Kadoma-shi Osaka-fu, 571 (JP)

(72) Inventor: Saito, Toshio
116-2, Gungebabazoe Mikage-cho
Higashinada-ku Kobe-shi Hyogo-ken (JP)
Inventor: Matsumoto, Kenzo
5-29, Nishitamiya-cho
Hirakats-shi Osaka-fu (JP)
Inventor: Soji, Kazuo
Tsukimi-so, 10-6, Kofuku-cho
Kadoma-shi Osaka-fu (JP)

(74) Representative: Eisenführ, Speiser & Strasse
Martinistrasse 24
D-2800 Bremen 1 (DE)

EP 0 070 029 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a cycle timer for controlling the ON-OFF periods of the operating cycle for a machine comprising:

encoder means for detecting the angle of rotation of a shaft of the machine and generating angle information indicative of the angular position of the machine shaft detected therefrom; read-in and read-out memory means for the storage of data descriptive of ON-OFF states of output signals corresponding to the angle information; input means for writing the data in the memory means in correspondence with an arbitrary angular position of the machine shaft, and output means for reading out the data from the memory means, said memory means storing data descriptive of the ON-OFF states of a plurality of output signals including one or a plurality of ON regions for each output signal, the output signals corresponding to respective angle information to be read out in parallel output channels.

Such a cycle timer is known from reference US—A—3 905 793 and includes a position indicator shaft, one rotation of which corresponds to one complete cycle of all the various sections of an eight section machine. The signal of the cycle timer is related to a feeder operation, and this signal controls the cycle from the start of one section to the start of the next section. For each section there is provided an off-set-setting which relates to the synchronizing of the various sections with respect to each other, and a start/stop angle-setting which defines the time within the section cycle at which the individual section is either started or stopped. Thus, this known cycle timer controls but one channel, the feeder action being controlled sequentially. There being no parallel channels with parallel output signals.

US—A—4 249 248 discloses a programmable sequence controller which supplies one selection signal at a time to one of the output drive units to activate only one output unit at each time, the selection of the units being thus on a sequential basis and not in parallel.

A further example of the conventional means for timing control operation during a sequential control of any known machine includes such a cycle timer as disclosed in the Japanese Laid-open Patent Publication No. 55-28135. The cycle timer disclosed in this publication utilizes a rotary encoder in the area where an external angle information is detected and is so designed that a timing information fed from the rotary encoder can be compared with a predetermined timing information stored in a memory, an output signal being subsequently generated when they have found coinciding with each other. This known cycle timer has been considered advantageous in that both the setting accuracy and the reproductivity had been improved, requiring the reduced time for the adjustment. However, this known cycle timer has failed to have a capability of setting an arbitrary angle of the rotary encoder to a reference point, to make the original point of the machine coincide with the original point of the cycle timer. This is required to be performed when the rotary encoder is coupled with the shaft which generates the angle information of the machine. Since this adjustment is to be performed in a narrow area in the machine, it can not be performed with no substantial difficulty and it has been physically difficult to make the coincidence within a certain tolerance. Further each output terminal of this known cycle timer has been unable to generate set and reset outputs two times or more during each cycle.

The object of the present invention is to provide a cycle timer of the above-referenced kind which is capable of properly outputting timing signals in parallel via a plurality of different channels in a simple and quick way without requiring much processing time.

According to the present invention there is provided a cycle timer for controlling the ON-OFF periods of the operating cycle of a machine comprising:

encoder means for detecting the angle of rotation of a shaft of the machine and generating angle information indicative of the angular position of the machine shaft detected therefrom; read-in and read-out memory means for the storage of data descriptive of ON-OFF states of output signals corresponding to the angle information; input means for writing the data in the memory means in correspondence with an arbitrary angular position of the machine shaft, and output means for reading out the data from the memory means, said memory means storing data descriptive of the ON-OFF states of a plurality of output signals including one or a plurality of ON regions for each output signal, the output signals corresponding to respective angle information to be read out in parallel output channels. This cycle timer is characterized by said output means reading out the data for all output channels as multibit data blocks from the memory means in response to a given angular position of said machine shaft detected by said encoder means, each of said data blocks containing the data for respective groups of output channels being transferred to an associated latch circuit in succession, the latch circuits outputting turn on and off output signals on parallel output channels upon receipt of the data blocks.

Advantages of the invention will become obvious from the following description in conjunction with the accompanying drawings which show a preferred embodiment of the invention.

Fig. 1 is a schematic diagram showing a construction of a cycle timer embodying the present invention;

Fig. 2 is a block circuit diagram of a control unit used therein;

Fig. 3 is a conversion table showing angle display data and angle information stored in a fixed memory;

Fig. 4 is a timing chart for each channel;

Fig. 5 is a diagram showing timings stored in a non-volatile memory; and

Fig. 6 is a table for storing angle information a, b and c shown in Fig. 4.

Referring first to Fig. 1, reference numeral 1 represents a shaft for giving a timing necessary to control a machine. This shaft 1 is generally operatively associated with the operation of the machine. To this shaft 1, an absolute type rotary encoder 2 which forms an angle detector of a cycle timer according to the present invention is coupled and, therefore, an angle information of the shaft 1 can be fed to a control unit 3 of the cycle timer. The control unit 3 supplies to a control device 4 a timing necessary to effect a control in dependence on the rotation of the shaft 1 on the basis of a timing information previously programmed in the control unit 3 and information given by the rotary encoder 2.

The details of the control unit 3 of the cycle timer are shown in Fig. 2. Referring to Fig. 2, the control unit 3 includes an encoding circuit 5 for converting information from the rotary encoder 2 into pure binary codes suited for data processing, and a fixed memory 6 for storing in the form of a command code a programme necessary to control the cycle timer and also for storing, in a manner shown in Fig. 3, a table necessary to convert information generated from the encoding circuit 5 into codes suited for display of the angle.

The codes necessary for the angle display may be obtained by calculation, but the table is used in the present invention for increasing the response.

The control unit 3 also includes a non-volatile memory for storing data concerning on and off regions of each channel, as will be described later, programmed by a keyboard 8 having a plurality of decimal digit keys, the starting and terminating point of the on region and input correcting data indicative of the difference between the machine original point and the original point of the rotary encoder. The term "channel" hereinabove referred to is a name given to the timing outputted from the control unit of the cycle timer and, in the illustrated embodiment, is comprised of 40 channels CH1 to CH40. Each channel varies during each cycle in a manner as shown in Fig. 4. In Fig. 4, the interval between the points a and b and that between the points c and d are on regions, and other intervals are off regions, the points a and c being the starting points while the points b and d are the terminating points. In this example, it may be possible to set a=b or c=d. Where the shaft 1 of the machine is to be coupled with the encoder 2, it is not always physically easy to make the machine original point coincide with the original point of the encoder within a certain tolerance. Accordingly, the cycle timer according to the present invention is so designed that the shaft 1 can be connected to the encoder at any arbitrarily chosen angle of the encoder and the machine original point can be subsequently electrically made to coincide with the original point of the encoder. The input correcting data referred to hereinbefore are the angle information which has been outputted from the encoding circuit 5 and then stored in the memory by means of the keyboard 8 so long as the machine is in the original point. The cycle timer according to the present invention operates in such a manner that, by subtracting the input correcting data from the angle information fed from the shaft 1, the machine original point can be made equivalently coinciding with the original point of the encoder.

The usual operation of the cycle timer will now be described with reference to the Figures.

Reference numeral 10 represents a central processing unit (hereinafter referred to as "CPU"). If the function of the CPU 10 is utilized to supply the angle information of the machine from the encoding circuit 5, to subtract the input correcting data from such angle information, to search for three digit data xi, yi and zi for the display from the corrected information i while the table shown in Fig. 3 is utilized, and finally to supply the three digit data to a keyboard display interface 11, a display unit 9 will display the current angle occupied by the shaft 1. The corrected angle information i is subsequently used in the search of the table shown in Fig. 5 for the purpose of outputting the timing. Fig. 5 illustrates the table wherein the axis of ordinate and the axis of abscissas represent the angle and the channel number, respectively, and wherein, for example, if the channel CH1 is in such a timing as shown in Fig. 4, the timing condition is such that the angle ranges from 0 to a, a to b, b to c, c to d and d to FF [H] under the first column in the table of Fig. 5 represent 0, 1, 0, 1 and 0, respectively. By the operation of the CPU 10, the timing conditions for CH1 to CH40 at the angle information i are transferred to latch circuits T'1, T'2, T'3, T'4 and T'5 per eight bit data blocks from the table of Fig. 5 in the order of T1, T2, T3, T4 and T5 and the timing for all of the channels at the angle information i is outputted. That is to say the multibit data blocks T1, T2, T3, T4 and T5 exactly correspond to the latch circuits T'1, T'2, T'3, T'4 and T'5, respectively.

Reference numeral 13 represents an output amplifier.

Even though the angle information i from the machine varies, all of the timing conditions can be outputted by repeating the above described procedure.

Hereinafter, a method for stipulating the condition for the output timing will be described with reference to the figures.

Prior to the setting of the timing, the memory stores random timings. However, when the channel number to which the timing is to be set is designated and the angle a shown in Fig. 4 is subsequently supplied in the form of a number of three figures, the CPU converts this number of three figures into data xj, yj and zj for the display of the angle, then performs a search to find an angle information j corresponding thereto from the table of Fig. 3, transfer the angle information to the table of Fig. 6 stored in the non-volatile memory 7 and finally rewrites the timing condition of Fig. 5 on the basis of these data. By rewriting the timings b, c and d in a similar manner, the timing for one channel completes. Thus, it will readily be seen that, by rewriting the subsequent channels sequentially, the timings for all of the channels can be set.

As can readily be understood from Fig. 2, the CPU can be made to have a capability of directly transferring the angle information of the machine, which has been supplied from the encoding circuit, to the table of Fig. 6 and then rewriting the timing condition of Fig. 5 on the basis thereof. This method by which the angle of timing can be set is hereinafter referred as "teaching". By the utilization of this teaching, it is possible to manually move an object to be controlled, that is, the shaft 1, to a position necessary for the timing control, to store the current angle information of the shaft in the above described manner, and to set the timing for alignment by repeating the above described procedures sequentially. In addition, the above described two methods may be concurrently used in a mixed form.

Although the present invention has fully been described in conjunction with the utilization of the keyboard for setting the timing, in the case of mass-production machines, the setting of the timing can be done in reduced time only by making the original points coincide with each other electrically if the timing information is stored in the fixed memory once the control timing has been determined without relying on the keyboard.

Although reference has been made to the use of the CPU, any suitable arithmetic processing unit may be employed instead of the CPU.

In addition, although it has been described that the number of repetition of on and off of each channel for each channel is two, it can be increased as desired by increasing the table of Fig. 6.

As hereinbefore described, the cycle timer according to the present invention is advantageous over the prior art on in the following respects.

1) No mechanical adjustment to coincide the original point of the object to be controlled, that is, the shaft, with that of the encoder is required and, therefore, any possible error in angle due to displacement which would occur during the mechanical adjustment can be eliminated with the minimized time required to perform the coinciding operation.

2) Even in the case where the timing effective to set actuators of identical design to be controlled two times or more for each cycle is required, timing outputs of two or more channels are utilized to give the timing for each channel without any additional circuit components required.

**Claims**

1. A cycle timer for controlling the ON-OFF periods of the operating cycle of a machine comprising:

encoder means (5) for detecting the angle of rotation of a shaft (1) of the machine and generating angle information indicative of the angular position of the machine shaft (1) detected therefrom;

read-in and read-out memory means (7) for the storage of data descriptive of ON-OFF states of output signals corresponding to the angle information;

input means (8—11) for writing the data in the memory means (7) in correspondence with an arbitrary angular position of the machine shaft (1), and output means (10, 12, 13) for reading out the data from the memory means (7), said memory means (7) storing data descriptive of the ON-OFF states of a plurality of output signals including one or a plurality of ON regions for each output signal, the output signals corresponding to respective angle information to be read out in parallel output channels (CH1...CH40),

characterized by said output means (10, 12, 13) reading out the data for all output channels (CH1...CH40) as multibit data blocks (T1, T2...T5) from the memory means (7) in response to a given angular position of said machine shaft (1) detected by said encoder means (5), each of said data blocks (T1...T5) containing the data for respective groups of output channels being transferred to an associated latch circuit (T'1...T'5) in succession, the latch circuits (T'1...T'5) outputting turn on and off output signals on parallel output channels (CH1...CH8; CH9...CH16; CH17...CH24; CH25...CH32; CH33...CH40) upon receipt of the data blocks (T1...T5).

2. A cycle timer as claimed in claim 1, wherein said program means (8—11) writes the ON-OFF data corresponding to the angular position of the machine shaft (1) in the memory means (7) for any selected output channel (CH1...CH40).

3. A cycle timer as claimed in claim 2, wherein said program means (8—11) writes in the memory means (7) the angle information, as original condition correction data, which is obtained by the encoder means (5) when the machine shaft (1) is positioned at an original point.

4. A cycle timer as claimed in one of the claims 1 to 3, wherein a keyboard (8) is provided for inputting angle values of starting and terminating points of the ON region for a selected output channel (CH1...CH40) and that the program means (8—11) writes in the memory means (7) the ON-OFF states of the selected output channel corresponding to the angular position of the machine shaft (1) according to the angle value inputted from the keyboard (8).

5. A cycle timer as claimed in claim 1, characterized in that the program means (8—11) directly transfers the angle information from the encoder means (5) into the memory means (7) for any selected output channel.

**Patentansprüche**

1. Ein zyklischer Zeitmesser zur Steuerung der AN-AUS-Perioden des Betriebszyklus einer Maschine mit:

Encodermitteln (5) zur Detektierung des Drehwinkels einer Welle (1) der Maschine und Erzeugung einer Winkelinformation, die die daraus detektiert Winkelposition der Maschinenwelle (1) anzeigt;

Einlese- und Auslesespeichermitteln (7) zur Abspeicherung von Daten, die AN-AUS-Zustände der Ausgangssignale entsprechend der Winkelinformation beschreiben;

Eingabemitteln (8—11) zum Schreiben der Daten in die Speichermittel (7) entsprechend einer beliebigen Winkelposition der Maschinenwelle (1) und Ausgabemitteln (10, 12, 13) zum Auslesen der Daten aus den Speichermitteln (7), wobei die Speichermittel (7) Daten speichern, die die AN-AUS-Zustände einer Vielzahl von Ausgangssignalen mit einem oder mehreren AN-Bereichen für jedes Ausgangssignal beschreiben, wobei die Ausgangssignale einer zugehörigen, in parallelen Ausgangskanälen (CH1...CH40) auszulesenden Winkelinformation entsprechen,

gekennzeichnet durch Ausgabemittel (10, 12, 13), die die Daten von sämtlichen Ausgangskanälen (CH1...CH40) als Multibit-Datenblöcke (T1, T2...T5) aus den Speichermitteln (7), ausgelöst durch eine gegebene Winkelposition der Maschinenwelle (1), die von den Encodermitteln (5) detektiert worden ist, auslesen, wobei jeder Datenblock (T1...T5) die Daten für entsprechende Gruppen von Ausgangskanälen enthalten, die der Reihe nach an einen zugehörigen Latch-Schaltkreis (T'1...T'5) übertragen werden, wobei die Latch-Schaltkreise (T'1...T'5) An- und Abschaltausgangssignale auf parallelen Ausgangskanälen (CH1...CH8; CH9...CH16; CH17...CH24; CH25...CH32; CH33...CH40) bei Empfang der Datenblöcke (T1...T5) ausgeben.

2. Ein zyklischer Zeitmesser nach Anspruch 1, bei welchem die Programmittel (8—11) die der Winkelposition der Maschinenwelle (1) entsprechenden AN-AUS-Daten in die Speichermittel (7) für einen ausgewählten Ausgangskanal (CH1...CH40) einschreiben.

3. Ein zyklischer Zeitmesser nach Anspruch 2, bei welchem die Programmittel (8—11) in die Speichermittel (7) die Winkelinformation als ursprüngliche Zustandskorrekturdaten einschreiben, die von den Encodermitteln (5) erhalten worden sind, wenn die Maschinenwelle (1) an einem Ursprungspunkt positioniert ist.

4. Ein zyklischer Zeitmesser nach einem der Ansprüche 1 bis 3, bei welchem eine Tastatur (8) zur Eingabe von Winkelwerten von Anfangs- und Endpunkten des AN-Bereiches für einen ausgewählten ausgangskanal (CH1...CH40) vorgesehen ist und daß die Programmittel (8—11) in die Speichermittel (7) die AN-AUS-Zustände des ausgewählten Ausgangskanals entsprechend der Winkelposition der Maschinenwelle (1) in Übereinstimmung mit dem an der Tastatur (8) eingegebenen Winkelwert einschreiben.

5. Ein zyklischer Zeitmesser nach Anspruch 1, dadurch gekennzeichnet, daß die Programmittel (8—11) die Winkelinformation von den Encodermitteln (5) direkt in die Speichermittel (7) für einen ausgewählten Ausgangskanal übertragen.

**Revendications**

1. Minuterie cyclique permettant de commander les périodes de marche et d'arrêt du cycle de fonctionnement d'une machine, comprenant:

un moyen codeur (5) servant à détecter l'angle de rotation d'un arbre (1) de la machine et à produire une information d'angle indicative de la position angulaire de l'arbre (1) de la machine détectée par celui-ci;

un moyen (7) faisant fonction de mémoire de stockage et d'extraction d'information, servant à l'emmagasinage de données descriptives des états de marche et d'arrêt de signaux de sortie correspondant à l'information d'angle;

un moyen d'entrée (8—11) servant à écrire les données dans le moyen de mémoire (7) en correspondance avec une position angulaire arbitraire de l'arbre (1) de la machine, et un moyen de sortie (10, 12, 13) servant à extraire les données du moyen de mémoire (7), ledit moyen de mémoire (7) emmagasinant des données descriptives des états de marche et d'arrêt de plusieurs signaux de sortie, comprenant une ou plusieurs régions de marche pour chaque signal de sortie, les signaux de sortie correpondant aux informations d'angle respectives devant être lues sur des canaux de sortie en parallèle (CH1,..., CH40),

caractérisée en ce que ledit moyen de sortie (10, 12, 13) extrait les données relatives à tous les canaux de sortie (CH1,..., CH40) sous forme de blocs de donnés de plusieurs bits (T1, T2, ..., T5) du moyen de mémoire (7) en réponse à une position angulaire donnée dudit arbre (1) de la machine détectée par ledit moyen codeur (5), chacun desdits blocs de données (T1, ..., T5) contenant les données relatives à des groupes respectifs de canaux de sortie étant transféré à un circuit de verrouillage associé (T'1, ..., T'5) en succession, les circuits de verrouillage (T'1, ..., T'5) délivrant des signaux de sortie de mise en marche ou mise à l'arrêt sur des canaux de sortie en parallèle (CH1, ..., CH8; CH9, ..., CH16; CH17, ..., CH24; CH25, ..., CH32; CH33, ..., CH40) dès réception des blocs de données (T1, ..., T5).

2. Minuterie cyclique selon la revendication 1, où ledit moyen de programmation (8—11) écrit les données de marche et d'arrêt correspondant à la position angulaire de l'arbre (1) de la machine dans le moyen de mémoire (7) pour n'importe quel canal de sortie (CH1, ..., CH40) sélectionné.

3. Minuterie cyclique selon la revendication 2, où ledit moyen de programmation (8—11) écrit dans le moyen de mémoire (7) l'information d'angle sous forme d'une donnée de correction de condition initiale, qui est obtenue par le moyen codeur (5) lorsque l'arbre (1) de la machine est positionné en un point initial.

4. Minuterie cyclique selon l'une quelconque des revendications 1 à 3, où un clavier (8) est destiné à introduire des valeurs d'angle de points de début et de fin de la région de marche pour un canal de sortie sélectionné (CH1, ..., CH40) et en ce que le moyen de programmation (8—11) écrit dans le moyen de mémoire (7) les états de marche et d'arrêt du canal de sortie sélectionné correspondant à la position angulaire de l'arbre (1) de la machine en fonction de la valeur d'angle introduite à partir du clavier (8).

5. Minuterie cyclique selon la revendication 1, caractérisé en ce que le moyen de programmation (8—11) transfère directement l'information d'angle du moyen codeur (5) jusque dans le moyen de mémoire (7) pour n'importe quel canal de sortie sélectionné.

Fig. 1

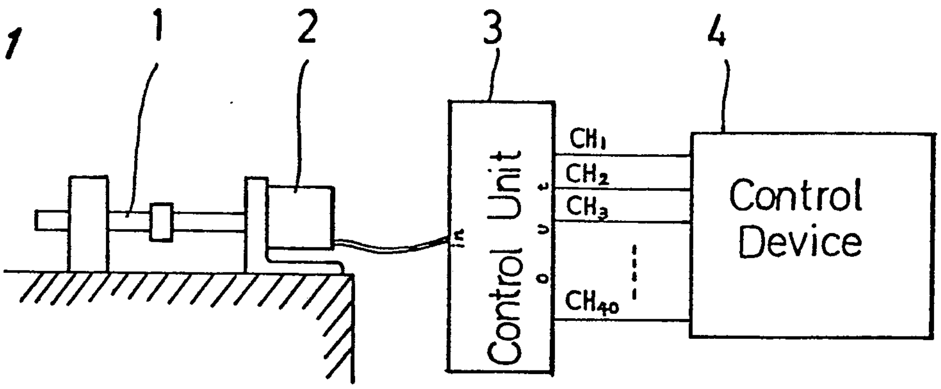


Fig. 3

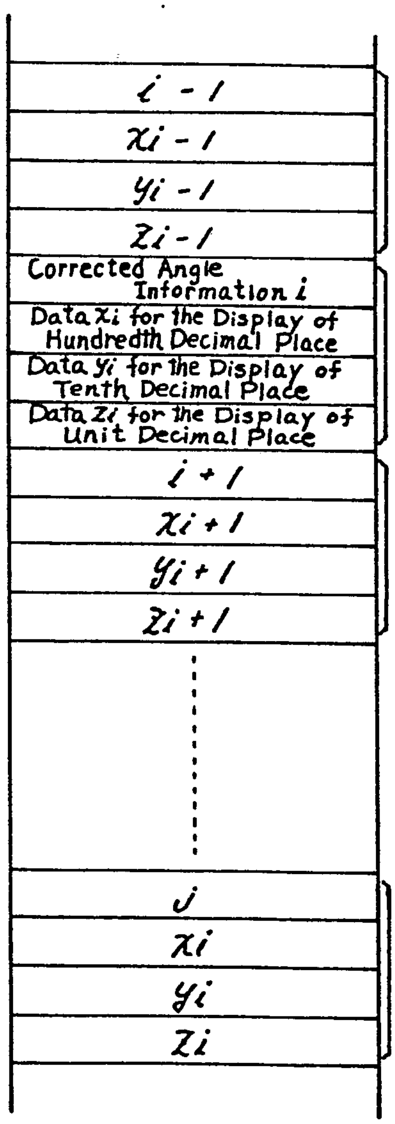


Fig. 6

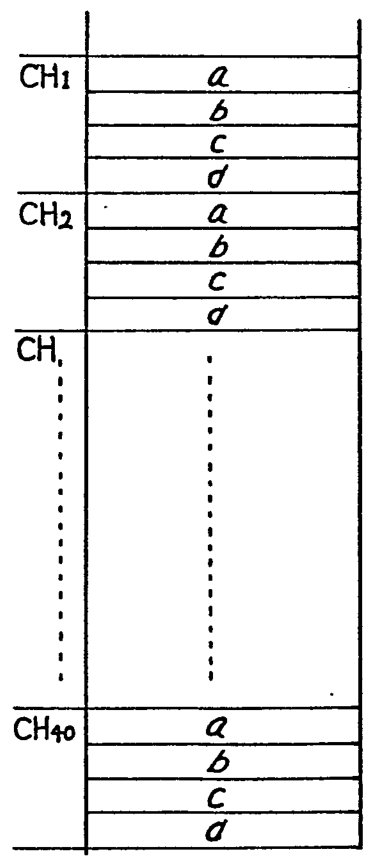

Fig. 2

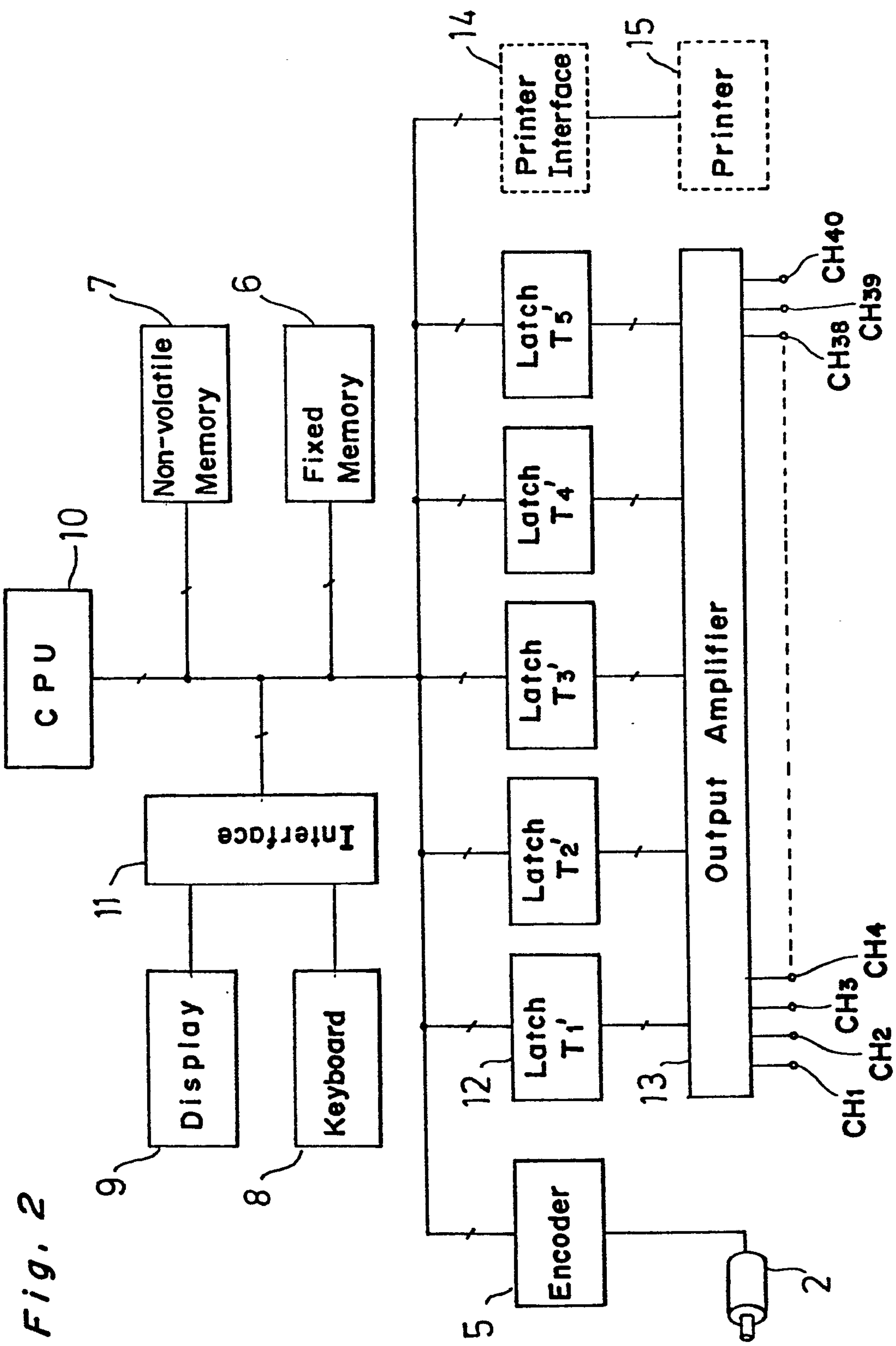
CPU
10
Non-volatile Memory
7
Fixed Memory
6
Interface
11
Display
9
Keyboard
8
Encoder
5
2
Latch T1'
12
Latch T2'
Latch T3'
Latch T4'
Latch T5'
Output Amplifier
13
Printer Interface
14
Printer
15
CH1
CH2
CH3
CH4
CH38
CH39
CH40

Fig. 4

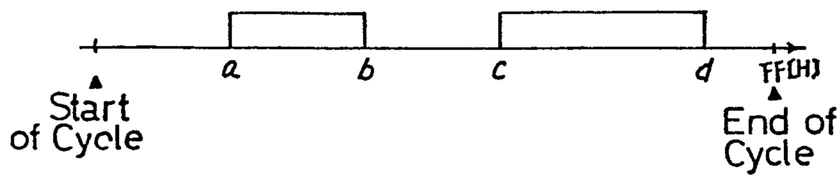
a
b
c
d
FF(H)
Start of Cycle
End of Cycle

Fig. 5

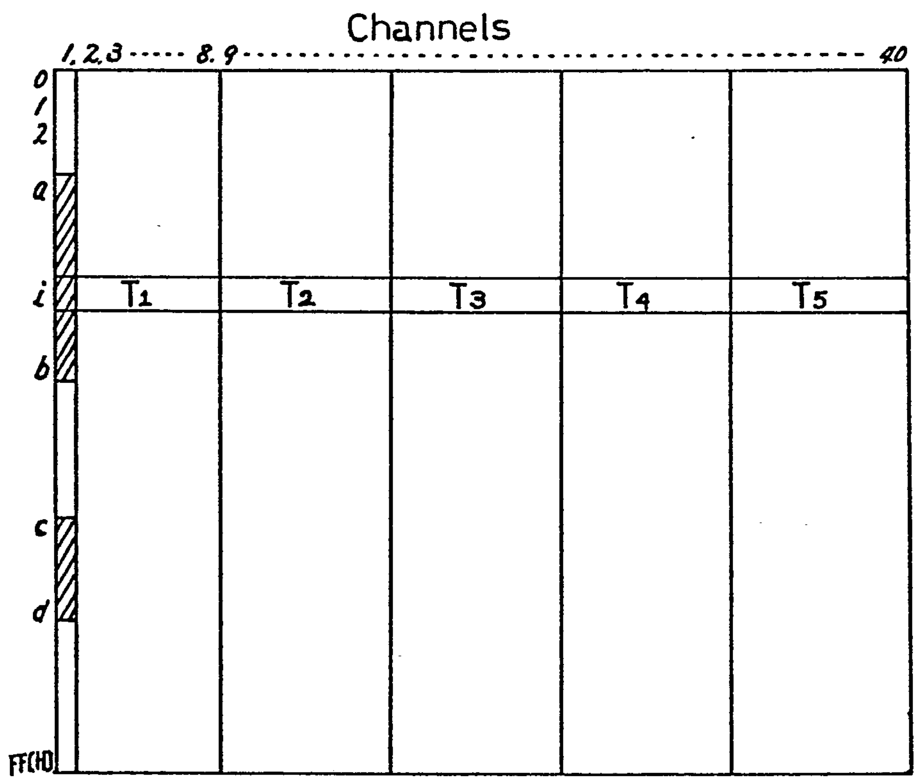
Channels
1, 2, 3 ····· 8, 9 ······ 40
0
1
2
a
i
b
c
d
FF(H)
T1
T2
T3
T4
T5